Europäisches Patentamt

European Patent Office

Office européen des brevets

(11) Veröffentlichungsnummer: **0 450 435 A2**

## (12) EUROPÄISCHE PATENTANMELDUNG

(21) Anmeldenummer: **91104606.8**

(22) Anmeldetag: **23.03.91**

(51) Int. Cl.5: **C08J 5/18**, //C08L77:00

(30) Priorität: **05.04.90 DE 4010958**

(43) Veröffentlichungstag der Anmeldung:
**09.10.91 Patentblatt 91/41**

(84) Benannte Vertragsstaaten:
**AT BE DE DK ES FR GB IT NL**

(71) Anmelder: **Wolff Walsrode Aktiengesellschaft Postfach**
**W-3030 Walsrode 1(DE)**

(72) Erfinder: **Koch, Wolfgang, Dr.**
**An der Warnau 40**
**W-3036 Bomlitz(DE)**
Erfinder: **Hennig-Cardinal von Widdern, Michael, D.I.**
**Grütterstrasse 15a**
**W-3030 Walsrode(DE)**
Erfinder: **Leffers, Heinrich, Dr.**
**Sieverdingen 10**
**W-3030 Walsrode(DE)**

(74) Vertreter: **Braun, Rolf, Dr. et al**
**c/o Bayer AG Konzernverwaltung RP Patente Konzern**
**W-5090 Leverkusen 1 Bayerwerk(DE)**

(54) **Gereckte, schrumpffähige Schlauchfolie.**

(57) Die neue, wenigstens monoaxial gereckte, schrumpffähige Schlauchfolie enthält wenigstens eine Schicht auf Basis einer Kunststoffmischung aus wenigstens einem aliphatischen Polyamid und einem säuremodifizierten Olefin-Polymeren mit freien Carboxylgruppen.

EP 0 450 435 A2

Die Erfindung betrifft eine gereckte, schrumpffähige Schlauchfolie zur Umhüllung von pastösen Füllgütern.

Umhüllungen für Lebensmittel, wie z.B. Koch- oder Brühwurst oder mittels gleichem oder ähnlichem Verfahren abgepackte pastöse Massen, müssen ein umfangreiches Anforderungsprofil erfüllen, um der Anwendung in der Praxis gerecht zu werden:

Mit der Abkühlung eines zuvor erhitzten Füllgutes geht eine Volumenverringerung einher. Auch nach der Abkühlung des verpackten Gutes muß die Folie faltenfrei und eng um den Verpackungsinhalt anliegen, um der Ware ein verkaufsförderndes Aussehen zu verleihen.

Die Hülle muß eine Temperaturbeständigkeit von bis zu 125 °C derart aufweisen, daß sie der Druckbeanspruchung durch das Füllgut auch während der Hitzebehandlung standhält.

Das Verpackungsgut muß über einen längeren Zeitraum lagerfähig sein. Die Lagerfähigkeit wird insbesondere durch die Barriere-Eigenschaften gegen Wasserdampf (WD) und Sauerstoff ($O_2$) beeinflußt. Für die unter anderem angestrebte Anwendung der Folie als Umhüllung von Brüh- und Kochwurst ist eine gute $O_2$-Barriere erforderlich, um der Vergrauung des Bräts an der der Folie zugekehrten Seite entgegenzuwirken. Die WD-Barriere behindert den Gewichtsverlust der Verkaufware, der zu faltigen Würsten führt, wenn die mit dem Wasserverlust einhergehende Volumenverringerung zu groß wird.

Speziell für die Anwendung als Brüh- und Kochwurstumhüllung muß die Hülle Bräthaftung aufweisen. Unter Bräthaftung versteht der Fachmann das Haftungsvermögen der Hülle am Füllgut. Die Affinität zwischen Umhüllung und Füllgut verhindert den Absatz von Gelee.

Die Folie muß sich wendelförmig ohne Vorzugsrichtung vom Verpackungsgut abschälen lassen. Beim Schälen darf es nicht zum Spleißen inhomogener Folienschichten (Delamination) kommen, da diese Erscheinung das Weiterreißen behindert und die Weiterreißrichtung undefinierbar wird.

Die Schlauchfolie wird vor der industriellen Verarbeitung mittels Füllautomaten in die Form einer Raffraupe überführt. Dabei wird die Folie längs der Schlauchachse gefältelt und anschließend im Verhältnis 30 : 1 bis 60 : 1 komprimiert. Die Folie muß der extrem hohen Knickbeanspruchung ohne Beschädigung standhalten.

Das Füllgut wird mit hoher Geschwindigkeit bei einem Fülldruck von bis zu 0,6 atü in die Schlauchfolie gepreßt. Das Folienmaterial darf nach der Druckbeaufschlagung weder partielle Aufweitungen (Beulen) noch eine wesentliche Aufweitung des Kalibers (Durchmesser) aufweisen. Die Folienqualität muß gewährleisten, daß auch hoher Fülldruck nicht zu einer plastischen Verformung der Schlauchfolie führt.

Bei den Füllautomaten beginnt jeder Fülltakt mit dem Anbringen eines Clips. Dabei greift eine Schere in der Weise um den Durchmesser der Schlauchfolie, daß der Schlauch abgequetscht wird. Im Anschluß daran wird diese Abquetschung durch einen Clip mechanisch fixiert. Das Anbringen der Clips erfolgt bei sehr hohen Taktzahlen, so daß die Folie flexibel und weich sei muß, um dieses Verfahren ohne Beschädigung zu überstehen.

Bisher sind keine Wursthüllen aus thermoplastischen Kunststoffen bekannt, die den hohen Anforderungen der Fleischverarbeiter hinsichtlich aller genannten Eigenschaften genügen.

Ausreichende Barrierewirkung gegen Sauerstoff und Wasserdampf gewährleistet der Einsatz bekannter, biaxial gereckter Folien, die auf Basis von VDC/VC-Copolymerisat hergestellt werden. Während die Lagerfähigkeit der darin verpackten Lebensmittel durchaus den Anforderungen der fleischverarbeitenden Industrie genügt, wirken sich die ungenügenden Festigkeitseigenschaften, wie Reißfestigkeit, Clipfestigkeit und E-Modul, nachteilig für den Verarbeiter aus.

Unter der biaxialen Reckung versteht der Fachmann die Längs- und Querverstreckung des Extrudates bei Temperaturen zwischen Glasübergangstemperatur und Schmelztemperatur. Die biaxiale Reckung kann beispielsweise mittels einer mit Luft gefüllten Blase erfolgen, die zwischen zwei mit unterschiedlich hohen Umfangsgeschwindigkeiten laufenden Walzenpaaren luftdicht eingeschlossen ist. Dabei richten sich die Moleküle in der Weise aus, daß die Bruchfestigkeit in erheblichem Maß gesteigert werden kann. Ausreichende Festigkeit ist dann gegeben, wenn die Verpackungshülle weder beim Füllvorgang (bis zu 0,6 atü) noch während des Sterilisierens bleibend verformt wird. Die Verpackungshülle muß ihre zylindrische Form beibehalten und darf sich nicht ausbeulen oder krümmen.

Die Ausrichtung der Moleküle bewirkt bei VDC/VC-Copolymerisaten eine drastische Verringerung der Weiterreißfestigkeit, was vom Fleischverarbeiter und Endverbraucher als negativ bewertet wird.

In der DE-A-2 850 182 wird eine schlauchförmige Verpackungsfolie zur Umhüllung von pastösen Lebensmitteln auf Basis von schrumpffähig verstrecktem aliphatischem Polyamid beschrieben. Diese Hülle erfüllt nicht die von der fleischverarbeitenden Industrie geforderte Wasserdampfbarriereeigenschaft. Die relativ hohe Wasserdampfdurchlässigkeit führt zu Gewichtsverlusten während der Lagerzeit. Parallel zum Gewichtsverlust reduziert sich das Volumen des verpackten Gutes, so daß die Schlauchfolie nach einer gewissen Lagerzeit faltig wird. Zudem können beim Reckprozeß der genannten aliphatischen Polyamide Störungen in Form von Instabilität der Reckblase auftreten. Die Weiterreißfestigkeit ist sehr gering.

Die EP-A-0 176 980 beschreibt eine einschichtige Wursthülle auf Basis von Mischungen aus Mono- bzw. Copolyamid mit Polyterephthalsäureester und/oder Copolyester. Die Zumischung von Polyester zu Polyamid reduziert die Festigkeitsabnahme der Schlauchfolie während des Brühens oder Kochens infolge von Wasseraufnahme. Nachteilig ist bei dieser Folie die unzureichende Wasserdampfbarriere, die zu Gewichtsverlusten und Faltigkeit führt.

In der EP-A-0 216 094 wird eine biaxial gereckte Schlauchfolie aus einer Polymermischung von (Co)Polyamid mit EVOH beschrieben. Die Zugabe des hydophilen EVOH bewirkt nachteiligerweise eine unzureichende Sperrwirkung gegen Wasserdampf. Infolge der Wasseraufnahme des EVOH kann während der Brüh- bzw. Kochphase eine Eintrübung des Folienschlauches auftreten.

Gemäß der EP-A-0 217 069 werden ternäre Kunststoffmischungen aus PA mit EVOH und mit Polyolefinen verwendet. Da die Zugabe an olefinischen Bestandteilen und EVOH in Summe durch den erfoderlichen Reckvorgang stark eingeschränkt ist, müssen bei dieser Art der Zusammensetzung Kompromisse geschlossen werden, die bei der Forderung nach hoher Rauchdurchlässigkeit immer zu hoher Wasserdampfaufnahme und damit zu schlechten Barriere-Eigenschaften, insbesondere gegen Wasserdampf, führen.

In der DE-A-2 850 181 wird eine schrumpffähig verstreckte Kunststoffmischung beschrieben, welche wenigstens ein aliphatisches Polyamid enthält, dessen Glasumwandlungspunkt sich in Abhängigkeit von Feuchtigkeitsaufnahme bis auf mindestens 3° C erniedrigen läßt, und wenigstens ein Ionomerharz und/oder modifiziertes Ethylen-Vinylacetat-Copolymer. Bei dieser Art von biaxial verstreckter Schlauchfolie kann beim Schälen der Folie von der fertiggestellten Wurst eine Delamination (Spleißen) in homogener Folienschichten auftreten. Das Abschälen der Folie wird dadurch wesentlich erschwert und die Schälrichtung undefinierbar.

Zudem führt die Aufnahme von Wasser bei olefinischen Komponenten wie Ionomerharz und EVOH aufgrund der daraus resultierenden Quellung immer zu einer Reduzierung der Barrierewirkung gegen Sauerstoff.

Aufgabe der Erfindung war es demzufolge, dem Anwender eine Schlauchfolie mit verbesserter Barrierewirkung und verbessertem Schälverhalten zur Verfügung zu stellen.

Gegenstand der Erfindung ist eine wenigstens monoaxial, vorzugsweise biaxial gereckte, schrumpffähige Schlauchfolie mit wenigstens einer Schicht auf Basis eines Polyamid/Polyolefin-Polymergemisches zur dauerhaften faltenfreien Umhüllung von in pastösem Zustand abgepackten Füllgütern, insbesondere Lebensmitteln, die während und im Anschluß an eine Temperaturbeanspruchung bis zu 120° C ausreichende Festigkeit aufweist und im befüllten Zustand aufgrund ihrer Barrierewirkung gegen Wasserdampf und Sauerstoff das Füllgut während einer längeren Lagerzeit dauerhaft faltenfrei und ohne sichtbare Sauerstoffeinwirkung umhüllt und die sich beim Endverbraucher wendelförmig und ohne Delamination vom Füllgut abschälen läßt, dadurch gekennzeichnet, daß das Polymergemisch

a) 60 bis 95 Gew.-% eines aliphatischen Polyamids und/oder Copolyamids und/oder Mischungen aus denselben und

b) wenigstens ein mit dem Polyamid bzw. mit den Polyamidmischungen teilverträgliches säuremodifiziertes Olefin-Polymer und/oder säuremodifiziertes Olefin-Copolymer, deren Carboxylgruppen als freie Säure vorliegen, in Mengen von 5 bis 40 Gewichtsteilen, bezogen auf das Gesamtgewicht des Polymergemisches enthält.

In der DE-AS 1 241 606 werden zwar bereits thermoplastisch zu verarbeitende Form- und Überzugsmassen auf Basis von Polyamiden und mit den Polyamiden unverträglichen Olefinen Copolymerisaten mit sauren Gruppen angegeben. Wenigstens monoaxial gereckte, schrumpffähige Schlauchfolien, insbesondere zur Umhüllung von in pastösem Zustand abgefüllten Füllgütern, insbesondere Lebensmitteln, werden dort aber nicht angegeben.

In einer bevorzugten Ausführungsform werden als Amide Polyamid-6, Polyamid-6,6,6, Polyamid-6,10 und Polyamid-6,12 verwendet. Diese Polyamide können alleine, als Blend oder als Copolymere verwendet werden. In einer ganz besonders bevorzugten Ausführungsform sind wenigstens 50 Mol-% des Polyamidanteils Polyamid-6. Der Anteil des Polyamides im Polyamid/Olefin-Polymergemisch beträgt im allgemeinen 60 bis 95 Gew.-%, vorzugsweise 75 bis 90 Gew.-%, bezogen auf das Polymergemisch.

Bei dem säuremodifizierten Olefin-Polymer- bzw. Copolymer handelt es sich vorzugsweise um Copolymere aus Ethylen und einer α,β-ethylenisch ungesättigten Monocarbonsäure, insbesondere Acrylsäure und vor allem Methacrylsäure. Besonders bevorzugt sind derartige Ethylen/Methacrylsäure-Copolymere, bei denen 9 bis 15 Mol-% der polymerisierten Einheiten Methacrylsäureeinheiten sind.

Das säuremodifizierte Olefinpolymer ist mit dem Polyamid teilverträglich. Unter teilverträglich wird verstanden, daß die Polymere auch nach sehr intensiver Vermischung, z.B. mittels eines Zweischneckenkompoundierextruders, teilweise phasensepariert vorliegen.

In einer bevorzugten Ausführungsform besteht die Schlauchfolie aus der Schicht auf Basis des Polyamides und des säuremodifizierten Olefin-Polymeren. Es ist hierbei möglich, übliche Additive und Zusatzstoffe in die Schicht oder auf ihre Oberfläche aufzubringen. Beispiele hierfür sind Gleitmittel, Nukleierungsmittel und Antiblockmittel.

In einer anderen bevorzugten Ausführungsform ist die Schicht auf Basis des Polymergemisches eine Schicht einer mehrschichtigen Schlauchfolie. Diese Schicht kann zur Verbesserung von mechanischen Eigenschaften und der Gas-Barriere-Eigenschaften verbunden sein mit anderen Schichten, gegebenenfalls unter Benutzung eines Haftvermittlers.

Die fertige verstreckte, schrumpffähige Schlauchfolie hat vorzugsweise eine Wandstärke von 25 bis 80 $\mu$m. Die erfindungsgemäße Schlauchfolie wird vorzugsweise hergestellt, indem das schlauchförmige Extrudat in einem Kühlbad sowohl von innen als auch von außen rasch abgekühlt wird. Vorzugsweise wird die Schlauchfolie anschließend biaxial gereckt. Die Reckung erfolgt vorzugsweise in Längs- und in Querrichtung um den Faktor 2 bis 3.5 in jeder Richtung.

Die erfindungsgemäße Hülle eignet sich insbesondere zur Umhüllung von Füllgütern, die in kaltem oder heißem Zustand abgepackt werden und im Anschluß daran eine Hitzebehandlung im Temperaturbereich zwischen 75 und 120° C erfahren. Während des Füllvorgangs in die Schlauchfolie liegen diese Füllgüter vorzugsweise in pastöser Konsistenz vor, was das Einbringen des Füllgutes in den Folienschlauch wesentlich erleichtert und den industriellen Einsatz von schnellaufenden Füllautomaten ermöglicht. Beispiele für diese Art von Füllgütern finden sich insbesondere bei in pastösem Zustand abgepackten Lebensmitteln, wie Wurst-, Käse- und Buttermasse, die im Anschluß an den Abfüllvorgang eine Hitzebehandlung zwecks Sterilisation und/oder Eiweißkoagulation erfahren. Die erfindungsgemäße Schlauchfolie ist ebenso geeignet als Verpackungsmaterial für technische Hilfsgüter, wie Dichtungsmasse, Klebstoffe, Schmiermittel usw., die in pastöser bzw. pulvriger Konsistenz vorliegen.

Beispiel

Eine Granulat-Mischung aus 80 Gew.-Teilen Polyamid-6 mit einer relativen Viskosität von 3,8 (gemessen in 96 %iger Schwefelsäure bei 20° C) und 20 Gew.-Teilen eines Ethylen-Methacrylsäure-Copolymerisates mit 12 Gew.-% Methacrylsäure wird derart aufbereitet, daß eine statistische Granulatkornverteilung vorliegt. Diese Granulatmischung wird in einem Extruder plastifiziert und homogenisiert und mit Hilfe einer Ringdüse zu einem Schlauch von 15 mm Durchmesser und 400 $\mu$m Wandstärke extrudiert. Die Kühlung des vertikal nach unten abgezogenen Schlauches erfolgt sowohl von außen als auch von innen mittels temperiertem Wasser.

Anschließend wird der so erhaltene Schlauch nach dem bekannten "double bubble"-Verfahren zwischen zwei dicht schließenden Walzenpaaren biaxial verstreckt und im weiteren wärmebehandelt und aufgewickelt. Der Quer- und Längsreckgrad beträgt jeweils Faktor 3, so daß das Endprodukt eine Wandstärke von ca. 45 $\mu$m und einen Durchmesser von 45 mm besitzt.

Der Schlauch zeichnet sich dadurch aus, daß er sich ohne Delamination im Bereich inhomogener Folienstrukturen, wendelförmig aufreißen läßt. Die Barrierewirkung gegenüber Sauerstoff und Wasserdampf ist weniger vom Feuchtigkeitsgehalt der Folie abhängig als bei bekannten Folien auf Basis von PA.

**Patentansprüche**

1. Wenigstens monoaxial gereckte, schrumpffähige Schlauchfolie mit wenigstens einer Schicht auf Basis eines Polyamid/Polyolefin-Polymergemisches zur dauerhaften faltenfreien Umhüllung von in pastösem Zustand abgepackten Füllgütern, dadurch gekennzeichnet, daß das Polymergemisch
   a) 60 bis 95 Gew.-% eines aliphatischen Polyamids und/oder Copolyamids und/oder Mischungen aus denselben und
   b) wenigstens ein mit dem Polyamid bzw. mit den Polyamidmischungen teilverträgliches säuremodifiziertes Olefin-Polymer und/oder säuremodifiziertes Olefin-Copolymer, deren Carboxylgruppen als freie Säure vorliegen, in Mengen von mindestens 5 bis höchstens 40 Gewichtsteilen, bezogen auf das Gesamtgewicht des Polymergemisches enthält.

2. Schlauchfolie nach Anspruch 1, dadurch gekennzeichnet, daß das Polymergemisch zu 75 bis 90 % aus wenigstens einem Polyamid besteht.

3. Schlauchfolie nach wenigstens einem der vorhergehenden Ansprüche, dadurch gekennzeichnet, daß wenigstens 50 Mol-% des Polyamides Polyamid-6 ist.

4. Schlauchfolie nach wenigstens einem der vorhergehenden Ansprüche, dadurch gekennzeichnet, daß das säuremodifizierte Olefin-Copolymer ein Copolymer auf Basis von Ethylen und einer α,β-ungesättigten Säure ist.

5. Schlauchfolie nach wenigstens einem der vorhergehenden Ansprüche, dadurch gekennzeichnet, daß das säuremodifizierte Olefin-Polymer ein Copolymer auf Basis Ethylen/Methacrylsäure ist.

6. Schlauchfolie nach Anspruch 5, dadurch gekennzeichnet, daß 9 bis 15 Mol-% des Copolymeren aus wiederkehrenden Methacrylsäureeinheiten bestehen.

7. Schlauchfolie nach wenigstens einem der vorhergehenden Ansprüche, dadurch gekennzeichnet, daß die Wandstärke zwischen 25 und 80 μm liegt.

8. Schlauchfolie nach wenigstens einem der vorhergehenden Ansprüche, dadurch gekennzeichnet, daß sie biaxial gereckt ist.

9. Verwendung der Schlauchfolie nach wenigstens einem der vorhergehenden Ansprüche zur dauerhaften faltenfreien Umhüllung von in pastösem Zustand abgepackten Füllgütern.